# EUROPÄISCHE PATENTSCHRIFT

(11) **EP 0 468 606 B1**
(45) Veröffentlichungstag und Bekanntmachung des Hinweises auf die Patenterteilung: **15.11.1995**
(21) Anmeldenummer: 91250160.8
(22) Anmeldetag: 18.06.1991
(51) Int. Cl.: F15B 13/042

(54) **Multifunktions-Mehrwegeschieberventil**
Multifunctional multiple-way sliding valve
Tiroir multifonctionnel à plusieurs voies

(30) Priorität: 24.07.1990 DE 4023806
(43) Veröffentlichungstag der Anmeldung: 29.01.1992
(73) Patentinhaber: MANNESMANN Aktiengesellschaft, 40027 Düsseldorf (DE)
(72) Erfinder: Conrath, Hilmar, W-5603 Wülfrath (DE); Meyer, Ernst-August, W-3201 Algermissen 5 (DE)
(74) Vertreter: Presting, Hans-Joachim, Dipl.-Ing.

(56) Entgegenhaltungen:
- EP-A- 0 093 359
- EP-A- 0 341 604
- CH-A- 364 152
- FR-A- 2 339 115

## Beschreibung

Die Erfindung betrifft ein Multifunktions-Mehrwegeschieberventil gemäß Oberbegriff von Anspruch 1.

Derartige fluidische Mehrwege-Schieberventile sind für eine festbestimmte Anzahl von Funktionen konstruiert und ausgebildet. Eine Erweiterung der Funktions-Anzahl ist daher nach Fertigstellung des Schieberventils nicht mehr möglich.

Aus der EP-A2-0 198 234 ist ein solches fluidisches Mehrwege-Schieberventil bekannt mit einem Ventilgehäuse, das eine flache Anschlußebene mit Dichtungsplatte für eine Einheits-Ventilträgerplatte (Europa-Platte; ISO-Platte) aufweist und an der gegenüberliegenden Längsseite eine weitere Anschlußebene für Magnetventile besitzt. Ein solches 5/2-Wegeventil oder ein 5/3-Wegeventil berücksichtigt bereits, daß die Anschlußöffnungen in der Trägerplatte unveränderbar festliegen und außerdem in beiden axialen Richtungen des Ventils zunehmend axial versetzt sind und außerdem die einzelnen Druckräume beim Schalten des Ventils im wesentlichen überschneidungsfrei geschaltet werden sollen. Hierbei geht die bekannte Lösung davon aus, daß derartige Ventile axial relativ lang bauen, der Aufbau der Ventilhülse besonders kompliziert ist und aus einer Vielzahl von zusammengesteckten Kunststoffteilen besteht. Dementsprechend seien Herstellung und Montage des Ventils besonders aufwendig. Außerdem sei die Forderung nach maximalen Strömungsdurchsätzen nicht oder nur unbefriedigend gelöst. Bei den bekannten, als 5/2-Wegeventil ausgebildeten Mehrwegeventilen sei außerdem eine 5/3-Wegeventilfunktion in ein und demselben Gehäuse nicht möglich. Um diese erkannten Nachteile zu vermeiden, wird bekannterweise vorgeschlagen, parallel zur Ventilmittellängsachse eine Gehäusebohrung anzuordnen, von der senkrecht zur Ventilmittellängsachse gerichtete Querbohrungen an der zweiten Längsseite münden, von denen zumindest die Gehäusebohrung absperrbar ist. In einem Ventildeckel ist hierbei eine Deckelnut eingearbeitet, und zwischen einem Gehäusezwischenring und dem Ventildeckel ist eine Dichtungsringscheibe eingefügt. Zwei untere Steuerkanäle lassen sich gegenüber zwei oberen Steuerkanälen derart axial versetzt anordnen, indem durch Drehen des Gehäusedeckels zusammen mit den jeweiligen Dichtungsringscheiben um 180 Grad nur jeweils die unteren oder die oberen Steuerkanäle über die zugehörigen Deckelnuten an die Gehäuseausnehmung angeschlossen sind, während gleichzeitig die anderen Steuerkanäle durch die Dichtungsringscheiben abgesperrt sind.

Ein solches System ist jedoch auf Seite des das Ventil erwerbenden Kunden nur schwierig handhabbar und eröffnet lediglich die Umschaltung von den unteren auf die oberen Steuerkanäle. Hierbei ist jedoch nicht möglich, die Demontage und Montage derartiger Gehäusedeckel beim Kunden durchzuführen, weil dadurch die Funktionsfähigkeit des Schieberventils beeinträchtigt werden könnte.

Der vorliegenden Erfindung liegt daher die Aufgabe zugrunde, ein Multifunktions-Mehrwegeschieberventil zu schaffen, d.h. ein für viele Funktionen ausgebildetes Schieberventil, das beim Kunden, der das Schieberventil erwirbt, ohne großen Aufwand und nur durch einfache Arbeiten für eine bestimmte Funktion selbst eingerichtet werden kann.

Die gestellte Aufgabe wird bei dem eingangs bezeichneten Multifunktions-Mehrwegeschieberventil erfindungsgemäß durch die im kennzeichnenden Teil von Anspruch 1 definierten Merkmale gelöst.

Auf der Kundenseite sind daher für die Einrichtung einer auszuwählenden Ventilfunktion lediglich noch allgemein Dichtmittel in eine beschriebene Position umzusetzen. Es ist jedoch nicht erforderlich, die Gehäusedeckel abzunehmen und sehr schwierig handhabbare Dichtungen zu versetzen. Die Einstellung der ausgewählten Ventilfunktion ist daher leicht und auch von weniger geschultem Personal durchführbar.

Der einfache Aufbau des erfindungsgemäßen Multifunktions-Mehrwegeschieberventils ist außerdem dahingehend gestaltet, daß die beiden getrennten Längenabschnitte der Gehäusebohrung mittels einer mittleren Dichtscheibe strömungstechnisch verbindbar oder trennbar sind.

In diesem Sinn ist weiterhin vorgesehen, daß die mittlere Dichtscheibe mit einem Umfangskanal versehen ist, der sich über ca. 180 Grad erstreckt und daß an der mittleren Dichtscheibe ein Vorsprung ausgebildet ist, der in jeweilige Ausschnitte greift, die um 90 Grad am Ventilgehäuse gegeneinander versetzt vorgesehen sind.

Die Vervielfachung der Funktionen wird außerdem dadurch unterstützt, daß im Bereich eines Gehäusedeckels angeordnete äußere Dichtscheiben vor paarweise an der zweiten Längsseite mündenden Querbohrungen vorgesehen sind, wobei der eine Längenabschnitt mittels einer zwischen den Querbohrungen angeordneten Kugel unterteilt ist.

Eine weitergehende Vervielfachung der Funktionen für das Multifunktions-Mehrwegeschieberventil wird dadurch erreicht, daß die einstückige Bodendichtung symmetrisch zur Symmetrieachse für die Druckleitung eine Durchgangsöffnung und einen Verschlußstopfen aufweist. Das jeweilige Wenden der einstückigen Bodendichtung führt daher dazu, daß die Druckleitung entweder verschlossen oder freigegeben wird.

Die Vervielfältigung der Funktionen wird außerdem dadurch unterstützt, daß die an der ersten Längsseite anliegende, einstückige Bodendichtung zumindest an den Stellen der Steuerleitungen und der Entlüftungen entfernbare Stopfen aufweist. Die aus plastifizierbaren Kunststoffen hergestellte Bodendichtung kann hierbei Stopfen mit vorgegebenen Sollbruchstellen aufweisen, die von dem die Einstellung durchführenden Fachmann leicht und ohne besondere Hilfswerkzeuge entfernt werden können.

Ein Ausführungsbeispiel der Erfindung ist in der Zeichnung dargestellt und wird im folgenden näher beschrieben. Es zeigen:
- Fig. 1: einen axialen Längsschnitt durch das Multifunktions-Mehrwegeschieberventil,
- Fig. 2: einen Querschnitt II - II wie in Fig. 1 in den Ebenen der Anschlüsse Z, Y; R, S; und P bezeichnet ist.
- Fig. 3: eine Ansicht von unten gegen das Ventilgehäuse und
- Fig. 4: eine Draufsicht auf die Oberseite des Ventilgehäuses.

Das Multifunktions-Mehrwegeschieberventil ist für Flüssigkeiten und insbesondere für gasförmige Medien, wie z.B. Luft, anwendbar. Ein Ventilgehäuse 1 weist an einer ersten Längsseite 2 eine abgedichtete flache Anschlußebene 3 auf für eine fluidische Versorgungsleitung P, für Verbraucherleitungen A und B, für Entlüftungsleitungen R und S sowie für Steuerleitungen Z und Y. An dieser Anschlußebene 3 liegt unter Einlegung einer Bodendichtung 4 eine weiter nicht dargestellte Einheitsventilträgerplatte, die auch als "Europa-Platte" oder international genormt als "ISO-Platte" bezeichnet wird. In der weiter nicht dargestellten Einheitsventilträgerplatte sind gegenüberliegend zu den Leitungen Z,Y; R,S; A,B und P entsprechend spaltförmige, querverlaufende Öffnungen von Anschlußkanälen eingearbeitet.

Das Ventilgehäuse 1 nimmt eine zur Ventilmittellängsachse 5 zentrisch angeordnete linke Ventilhülse 6 auf. Der linken Ventilhülse 6 sind dem jeweiligen Durchflußkanal entsprechend den Leitungen Z, Y, R, S, A, B und P Ringdichtungen 7 zugeordnet. Der in der Reihe letzte Dichtring 8 liegt gegen eine rechte Ventilhülse 9 an. In der linken Ventilhülse 6 ist ein Ventilkolben 10 und in der rechten Ventilhülse 9 ein Ventilkolben 11 gebührt. Der Ventilkolben 11 weist eine Kolbendichtung 12 und der Ventilkolben 10 eine Kolbendichtung 13 auf. In beiden Ventilhülsen 6 und 9 sind außerdem eine Entlüftungsbohrung 14 und eine Entlüftungsnut 15 eingearbeitet. Die Schieber-Abschnitte sind mit 16,17 und 18 bezeichnet. Dazwischenliegend verlaufen wie üblich die die Strömung führenden Ringkanäle. Am linken und rechten Ende des Ventilgehäuses 1 verschließt jeweils ein Deckel 19 mit Dichtring 20 das Ventilgehäuse 1. Innerhalb des Deckels 19 ist ein Luftkanal 21 angeordnet, dessen fertigungstechnisch bedingter Zweig 22 mit einer eingepreßten Kugel 23a verschlossen ist. Am rechten Ende des Ventilgehäuses 1 verschließt entsprechend ein weiterer Deckel 19 das Ventilgehäuse 1 mit den bereits beschriebenen Merkmalen. Die Deckel 19 sind gegenüber dem Ventilgehäuse 1 mittels Dichtungsringen 24 abgedichtet und werden mittels Schrauben 25 befestigt.

Innerhalb der rechten Ventilhülse 9 ist eine Innenhülse 26 mit einer Dichtung 27 angeordnet. Für die Erweiterung der Anzahl von Funktionen, wobei ein Benutzer die Umstellung auf eine andere Funktion selbst durchführen kann, ist an einer zweiten Längsseite 28, die zur ersten Längsseite 2 parallel gegenüberliegend verläuft und parallel zur Ventilmittellängsachse 5 eine Gehäusebohrung 29 angeordnet. Von dieser Gehäusebohrung verlaufen senkrecht zur Ventilmittellängsachse 5 gerichtete Querbohrungen 30, die an der zweiten Längsseite 28 münden.

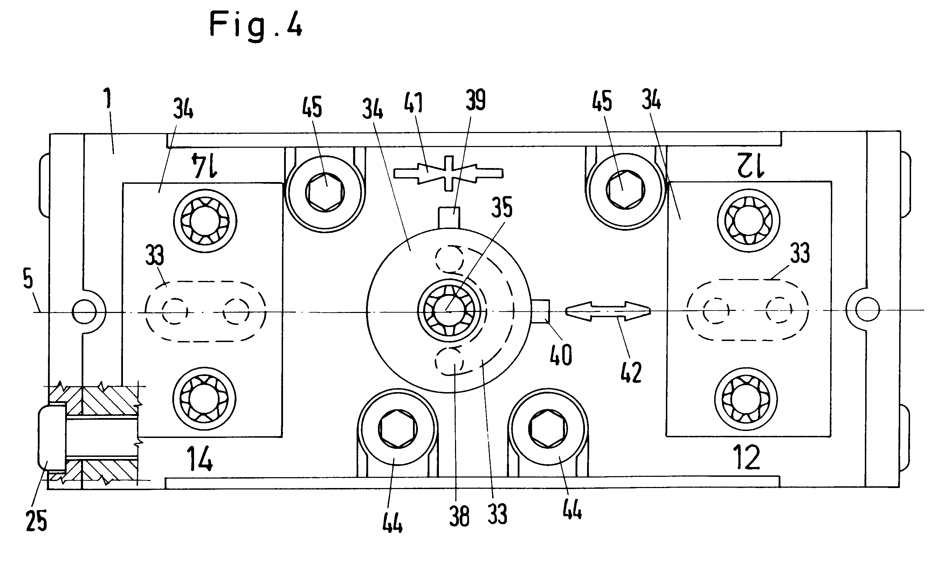

Die parallel zur Ventilmittellängsachse 5 verlaufende Gehäusebohrung 29 ist in zwei getrennte Längenabschnitte 29a und 29b eingeteilt. Jeder Längenabschnitt 29a, 29b weist selbständige Querbohrungen 30 mit Mündungen 31 auf. Vor diesen Mündungen 31 sind Dichtscheiben 32 angeordnet. Die Dichtscheiben 32 weisen zumindest einen Durchlaß 33 für jeweils eine Querbohrung 30 auf (Fig. 4). Die Dichtscheiben 32 werden durch Scheiben 34 und diese durch Schrauben 35 in ihrer ausgewählten Lage gehalten.

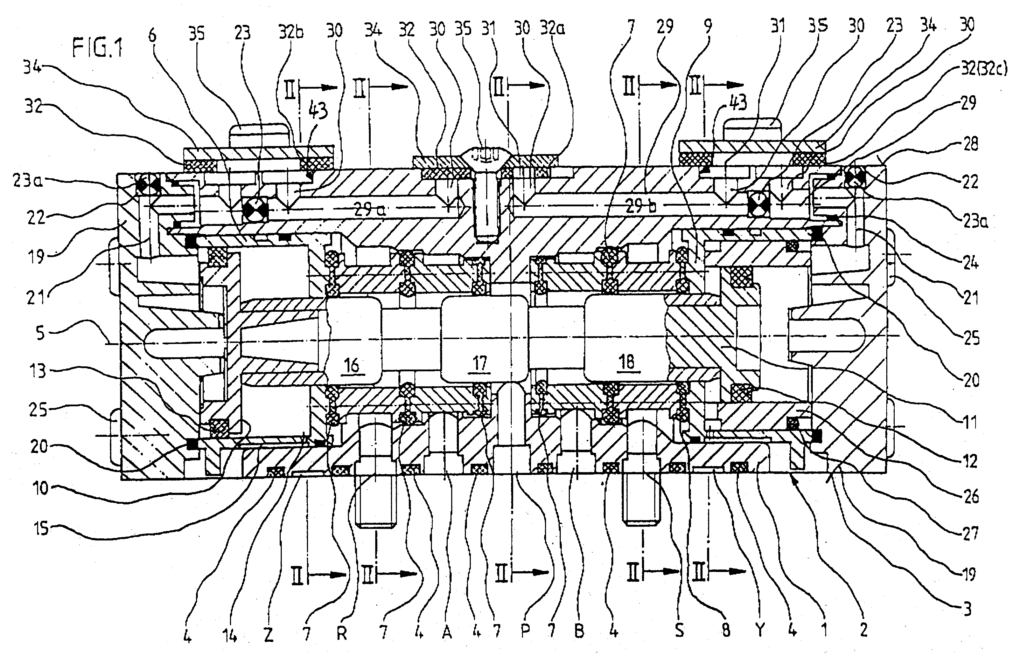

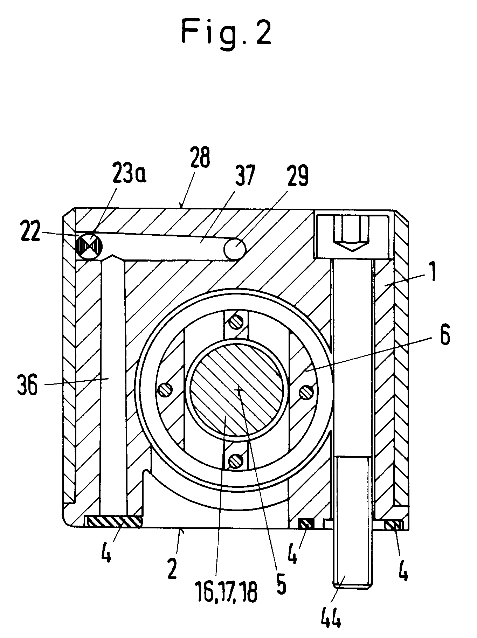

Jeweils in den Schnittebenen II - II gemäß Fig. 1 liegen Querkanäle 36 (Fig. 2), die über einen Verbindungskanal 37 mit den getrennten Längenabschnitten 29a und 29b in Verbindung stehen.

Die beiden getrennten Längenabschnitte 29a, 29b der Gehäusebohrung 29 sind mittels einer mittleren Dichtscheibe 32a miteinander strömungstechnisch verbindbar oder wie gezeichnet (Fig. 1) getrennt. Die strömungstechnische Verbindung entsteht durch einen Umfangskanal 38 (Fig. 4), wobei eine der beiden Querbohrungen 30 (in Fig. 1 die linke Querbohrung) überdeckt ist. Durch Lösen der Schraube 35 und Verdrehen der Dichtscheibe 32a um 90 Grad kann ein an der Dichtscheibe befindlicher Vorsprung 39 in einen Ausschnitt 40 greifen, so daß der Durchfluß entweder gesperrt ist (Symbol 41) oder freigegeben ist (Symbol 42).

Entsprechend sind im Bereich eines Gehäusedeckels 19 äußere Dichtscheiben 32b und 32c angeordnet. Die jeweils durch eine Kugel 23 getrennten Querbohrungen 30 teilt den einen Längsabschnitt 29a oder 29b in zwei weitere Abschnitte, wobei durch Verwendung der Scheiben 34 zusammen mit einer der Dichtscheiben 32b und 32c die Verbindung der Querbohrungen 30 hergestellt werden kann. Bei abgenommenen äußeren Dichtscheiben 32b, 32c können Vorsteuerventile an Stelle der Dichtscheiben 32b,32c aufgeflanscht werden, um die Verbindung der Querbohrungen 30 durch elektrischen Impuls herzustellen oder zu sperren.

Das Ventilgehäuse 1 wird mittels jeweils zwei Schraubenpaaren 44 und 45 mit der Einheitsventilträgerplatte verbunden. Die Schraubenpaare 44 und 45 verlaufen jeweils durch mit unterschiedlichem Abstand angeordnete Durchgangslöcherpaare 46 und 47.

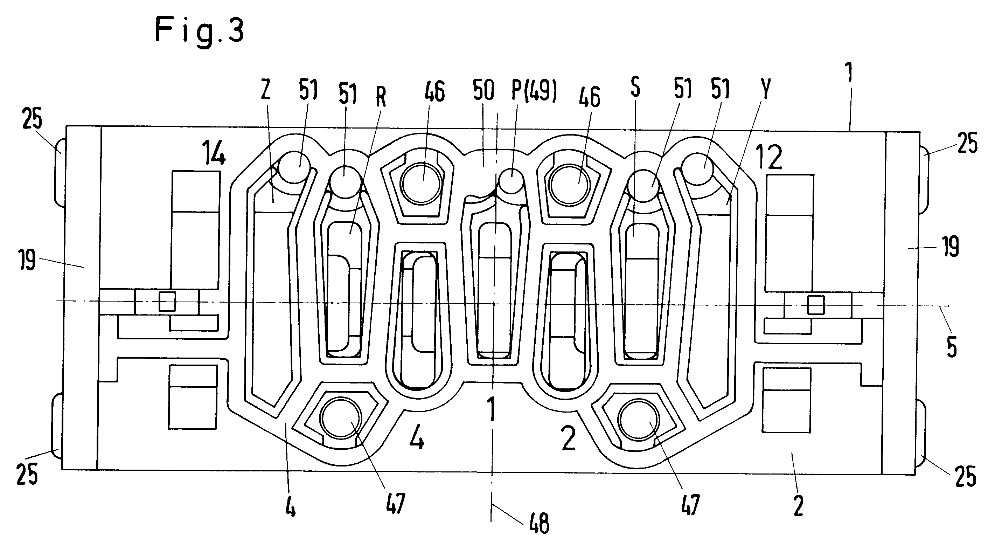

In Fig. 3 ist (an der Unterseite des Ventilgehäuses 1 befindlich) die einstückige Bodendichtung 4 in der Art eines durch Kunststoff/Gummi gebildeten Werkstoffes schraffiert dargestellt. Die einstückige Bodendichtung 4 ist symmetrisch zur Symmetrieachse 48 ausgebildet. Die einzelnen Querkanäle 36 sind daher über diese einstückige Bodendichtung 4 auf die jeweilige Offen- oder Schließfunktion abgestimmt, wobei die einstückige Bodendichtung 4 um die mittige Symmetrieachse 48 seitlich umlegbar ist, so daß in Kombination mit der in zwei Längenabschnitte 29a, 29b geteilten Gehäusebohrung 29 und der mittleren Dichtscheibe 32a sowie den äußeren Dichtscheiben 32b, 32c und wahlweise den elektrischen Vorsteuerventilen die nachstehend erläuterten Ventilfunktionen und andere zusätzlich leicht einstellbar sind.
Die einstückige Bodendichtung 4 weist z.B. symmetrisch zur Symmetrieachse 48 für die Druckleitung P eine Durchgangsöffnung 49 und einen Verschlußstopfen 50 auf.

Außerdem weist die an der ersten Längsseite 2 anliegende einstückige Bodendichtung 4 zumindest an den Stellen der Steuerleitungen Z oder Y und der Entlüftungen R und/oder S entfernbare Stopfen 51 auf.

Im einzelnen können zumindest folgende Funktionen auf Kundenseite an dem erfindungsgemäßen Multifunktions-Mehrwegeschieberventil leicht eingestellt werden:
1. Die Funktion Magnet/Luftfeder, interne Belüftung:
   - die mittlere Dichtscheibe 32a ist auf "Durchgang" gestellt
   - durch die Leitung P wird Druckluft über den Querkanal 36 und über die beiden äußeren offenen Dichtscheiben 32b und 32c auf die Ventilkolben 10 und 11 geleitet
      bei abgenommener Dichtscheibe 32b ist ein (nicht gezeichnetes) Vorsteuerventil aufgesetzt.
2. Die Funktion Magnet/Luftfeder, externe Belüftung:
   - die mittlere Dichtscheibe 32a ist auf "Durchgang" gestellt
   - durch die Steuerleitung Z wird Druckluft über beide auf "offen" gestellte Dichtscheiben 32b und 32c und über die auf "Durchgang" gestellte mittlere Dichtscheibe 32a auf die Ventilkolben 10 und 11 geleitet.
      bei abgenommener Dichtscheibe 32b ist ein Vorsteuerventil aufgesetzt.
   3. Die Funktion Magnet/Magnet, interne Belüftung:
   - die mittlere Dichtscheibe 32a ist auf "Durchgang" gestellt
   - Vorsteuerventile sind an den Ausnehmungen 43 angeschlossen
   - durch die Leitung P wird Druckluft auf die Ventilkolben 10 und 11 geleitet.
4. Die Funktion Magnet/Magnet, externe Belüftung:
   - die Steuerleitung Z ist mit Steuerluft beaufschlagt
   - die Druckleitung P ist geschlossen
   - die mittlere Dichtscheibe 32a ist auf "Durchgang" gestellt
   - die beiden äußeren Dichtscheiben 32b und 32c sind abgenommen und es ist jeweils ein Vorsteuerventil aufgesetzt.
5. Die Funktion Magnet/Luftfeder, Ausführung mit zwei Drücken:
   - die Entlüftungsleitungen R oder S sind offen
   - die Druckleitung P ist geschlossen
   - die mittlere Dichtscheibe 32a ist auf "Durchgang" gestellt
   - die äußere Dichtscheibe 32c ist auf "Durchgang" gestellt; es ist bei 32b ein Vorsteuerventil aufgesetzt
   - die Hauptluft steht bei R und S an.
6. Die Funktion Magnet/Magnet, Ausführung mit zwei Drücken:
   - die Entlüftungsleitungen R oder S sind offen
   - die Druckleitung P ist geschlossen
   - die mittlere Dichtscheibe 32a ist auf "Durchgang" gestellt
   - auf den beiden äußeren Ausnehmungen 43 ist jeweils ein Vorsteuerventil aufgesetzt.
7. Die Funktion pneumatisch betätigt/Luftfeder:
   - die Steuerleitung Z ist offen
   - die Druckleitung P ist geschlossen
   - die mittlere Dichtscheibe 32a ist geschlossen
   - die beiden äußeren Dichtscheiben 32b und 32c sind auf "Durchgang" gestellt.
8. Die Funktion pneumatisch/pneumatisch:
   - die Steuerleitung Z ist offen
   - die Druckleitung P ist geschlossen
   - die Steuerleitung Y wird beaufschlagt
   - die mittlere Dichtscheibe 32a ist gesperrt
   - die beiden äußeren Dichtscheiben 32b und 32c sind auf "Durchgang" gestellt.

Weitere Funktionen, wie z.B. Magnet/Magnet, Ausführung mit zwei Drücken und externer Belüftung; pneumatisch/Luftfeder, Ausführung mit zwei Drücken; pneumatisch/pneumatisch, Ausführung mit zwei Drücken oder Magnet/Magnet mit zwei verschiedenen externen Belüftungsdrücken sind ebenfalls vorteilhaft für die Erweiterung der von der Kundenseite selbst vorzunehmenden Einstellungen. Die mögliche Anzahl der Funktionen ist nicht durch die hier beschriebenen Beispiele beschränkt.

Eine weitere Ventilvariante mit Stell-Federrückführung anstelle der gezeichneten Luftfederrückführung weist ähnliche Vorzüge der freien Funktionswahl auf. Auf diese Ausführung wurde hier nicht näher eingegangen.

## Patentansprüche

1. Multifunktions-Mehrwegeschieberventil, insbesondere für gasförmige Medien, mit einem Ventilgehäuse (1), das an einer ersten Längsseite (2) eine abgedichtete Anschlußebene (3) für fluidische Versorgungs-, Steuer-, Verbraucher- und Entlüftungsleitungen (P;Z,Y;A,B;R,S) aufweist und dafür eine mit entsprechenden Anschlußkanälen versehene Trägerplatte vorgesehen ist, ferner mit einer zur Ventilmittellängsachse (5) zentrisch angeordneten Ventilhülse (6), die mit einer jeden Leitung (P;Z,Y;A,B;R,S) zugeordneten Ringdichtungen (7) versehen ist und mit einem koaxial zur Ventilhülse (6) angeordneten Ventilkolben (11), außerdem mit einer an einer zweiten Längsseite (28), die der ersten Längsseite (2) parallel gegenüberliegend verläuft, im Bereich dieser zweiten Längsseite (28) parallel zur Ventilmittellängsachse (5) verlaufenden Gehäusebohrung (29), von der senkrecht zur Ventilmittellängsachse (5) gerichtete Querbohrungen (30) an der Zweiten Längsseite (28) münden, wobei zumindest die Gehäusebohrung (29) abschnittweise absperrbar ist,
dadurch gekennzeichnet,
- daß die Gehäusebohrung (29) in zwei getrennte Längenabschnitte (29a,29b) eingeteilt ist,
- daß beide Längenabschnitte (29a,29b) Querbohrungen (30) aufweisen,
- daß vor den Mündungen (31) der Querbohrungen (30) jeweils eine mit einem Durchlaß (33) versehene Dichtscheibe (32a,32b,32c) angeordnet ist,
- daß von der ersten Längsseite (2) ausgehende, an die Versorgungsleitung (P), die Steuerleitungen (Z,Y), die Entlüftungsleitungen (R,S) angeschlossene Querkanäle (36) bis in die zwei getrennten Längenabschnitte (29a,29b) der Gehäusebohrung (29) geführt sind, und
- daß die einzelnen Querkanäle (36) mittels einer einstückigen Bodendichtung (4) auf die jeweilige Offen- oder Schließfunktion abgestimmt sind, wobei die einstückige Bodendichtung (4) um eine mittige Symmetrieachse (48) seitlich umlegbar ist, so daß in Kombination mit der Gehäusebohrung (29) und den Dichtscheiben (32a,32b,32c) mehrere Ventilfunktionen leicht einstellbar sind.

2. Multifunktions-Mehrwegeschieberventil nach Anspruch 1,
dadurch gekennzeichnet,
daß die beiden getrennten Längenabschnitte (29a,29b) der Gehäusebohrung (29) mittels einer mittleren Dichtscheibe (32a) strömungstechnisch verbindbar oder trennbar sind.

3. Multifunktions-Mehrwegeschieberventil nach Anspruch 2,
dadurch gekennzeichnet,
daß die mittlere Dichtscheibe (32a) mit einem Umfangskanal (38) versehen ist, der sich über ca. 180 Grad erstreckt und daß an der mittleren Dichtscheibe (32a) ein Vorsprung (39) ausgebildet ist, der in jeweilige Ausschnitte (40) greift, die um 90 Grad am Ventilgehäuse (1) gegeneinander versetzt vorgesehen sind.

4. Multifunktions-Mehrwegeschieberventil nach Anspruch 1,
dadurch gekennzeichnet,
daß im Bereich eines Gehäusedeckels (19) angeordnete äußere Dichtscheiben (32b,32c) vor paarweise an der zweiten Längsseite (28) mündenden Querbohrungen (30) vorgesehen sind, wobei der eine Längenabschnitt (29a;29b) mittels einer zwischen den Querbohrungen (30) angeordneten Kugel (23) unterteilt ist.

5. Multifunktions-Mehrwegeschieberventil nach einem oder mehreren der Ansprüche 1 bis 4,
dadurch gekennzeichnet,
daß die einstückige Bodendichtung (4) symmetrisch zur Symmetrieachse (48) für die Druckleitung (P) eine Durchgangsöffnung (49) und einen Verschlußstopfen (50) aufweist.

6. Multifunktions-Mehrwegeschieberventil nach einem oder mehreren der Ansprüche 1 bis 5,
dadurch gekennzeichnet,
daß die an der ersten Längsseite (2) anliegende, einstückige Bodendichtung (4) zumindest an den Stellen der Steuerleitungen (Z,Y) und der Entlüftungen (R,S) entfernbare Stopfen (51) aufweist.

## Claims

1. Multifunctional multichannel slide valve, for gaseous media in particular, with a valve housing (1) which has a sealed connection plane (3) for fluid supply, control, consumption and air-extraction ducts (P; Z, Y, B; R, S) on a first lengthwise side (2), and is provided with corresponding support plates provided with connection channels for this, and with a valve casing (6), disposed towards a valve central longitudinal axis (5), which is provided with one ring joint (7) for each duct (P; Z, Y; A, B; R, S), and with a valve-piston (11) which is disposed coaxially with a valve casing (6), and also with a housing boring (29), from which cross-borings open on a second lengthwise side (28), directed vertically in relation to a valve central longitudinal axis (5), which runs parallel to a valve central lengthwise axis (5) in an area of a said second lengthwise side (28) which runs parallel to a first lengthwise side, opposite a said first lengthwise side, whereby at least a housing boring (29) can be partly shut off,
wherein
- a housing boring (29) is divided up into two separate lengthwise sections (29a, 29b),
- both of two lengthwise sections (29a, 29b) have cross-borings (30),
- a seal disc (32a, 32b, 32c) provided with an outlet (33) is disposed in front of each of openings (31) of cross-borings (30),
- transverse channels (36) connected to a supply duct (P), control ducts (X, Y) and air extraction ducts (R, S), going out from a first lengthwise side (2), are directed into two separate longitudinal sections (29a, 29b) of a housing boring (20), and
- separate transverse channels (36) are adjusted to a function of being open and closed by means of a one-piece bottom-seal (47), whereby a one-piece bottom-seal (4) can be laterally set around a central axis of symmetry so that, in combination with a housing boring (29) and seal discs (32a, 32b, 32c), several valve functions can be easily adjusted to.

2. Multifunctional multi-channel slide valve in accordance with claim 1,
wherein
two separate longitudinal sections (29a, 29b) of a housing boring (29) can be connected or separated by means of a central seal disc (32a) inflow technique.

3. Multifunctional multi-channel slide valve in accordance with claim 2,
wherein
a central seal disc (32a) is provided with a peripheral channel (38) which, extends over approximately 180° and a projection (39) is developed on a said central seal disc (32a), and engages in relevant recesses (40) which are provided at 90°-intervals on a valve housing (1).

4. Multifunctional multi-channel slide valve in accordance with claim 1,
wherein
seal discs (32b, 32c) disposed in an area of a housing cover (19) are provided in front of paired cross-borings (30) which open on a second lengthwise side (28), whereby one longitudinal section (29a, 29b) is divided by a sphere (23) disposed between cross-borings (30).

5. Multifunctional multi-channel slide valve in accordance with one or several of claims 1 to 4,
wherein
a one-piece bottom seal (4), symmetrically in relation to an axis of symmetry (43), has an opening (49) and a blanking plug (50), for a pressure duct (P).

6. Multifunctional multi-channel slide valve in accordance with one or several of claims 1 to 5,
wherein
a one-piece bottom seal (4) lying on a first lengthwise side (2) has, at least on positions of control ducts (Z, Y) and air-extraction means (R, S), removable plugs (51).

## Revendications

1. Soupape de coulissement à plusieurs voies à fonctions multiples, en particulier pour des fluides sous forme de gaz, comportant un boîtier de soupape (1) qui présente sur une première face longitudinale (2) un plan de raccordement étanche (3) pour des liaisons fluidiques d'alimentation, de commande, de consommation et d'aération (P;Z,Y;A,B;R,S), et une plaque porteuse munie de canaux de raccordement correspondants étant prévue à cet effet, de plus une douille de soupape (6) agencée centralement par rapport à l'axe longitudinal central de soupape (5), douille de soupape qui est munie de joints annulaires (7) associés à chaque liaison (P;Z,Y;A,B;R,S), et un piston de soupape (11) agencé coaxialement à la douille de soupape (6), en outre un perçage de boîtier (29) s'étendant parallèlement à l'axe longitudinal central de soupape (5) dans la zone d'une deuxième face longitudinale (28), la deuxième face longitudinale (28) s'étendant parallèlement à la première face longitudinale (2), des perçages transversaux (30) orientés perpendiculairement à l'axe longitudinal central de soupape (5) débouchant à partir du perçage de boîtier dans la deuxième face longitudinale (28), au moins le perçage de boîtier (29) pouvant être fermé par tronçons,
caractérisée
- en ce que le perçage de boîtier (29) est divisé en deux tronçons longitudinaux séparés (29a,29b),
- en ce que les deux tronçons longitudinaux (29a,29b) présentent des perçages transversaux (30),
- en ce que devant les ouvertures (31) des perçages transversaux (30), est agencé à chaque fois un disque d'étanchéité (32a,32b,32c) muni d'un passage (33),
- en ce qu'à partir de la première face longitudinale (2) sont guidés des canaux transversaux (36) raccordés à la liaison d'alimentation (P), aux liaisons de commande (Z,Y), aux liaisons d'aération (R,S), jusque dans les deux tronçons longitudinaux séparés (29a,29b) du perçage de boîtier (29), et
- en ce que les canaux transversaux individuels (36) sont adaptés au moyen d'un joint de fond (4) en une pièce à la fonction correspondante d'ouverture ou de fermeture, le joint de fond (4) en une seule pièce pouvant être disposé latéralement autour d'un axe de symétrie central (48) de sorte qu'en combinaison avec le perçage de boîtier (29) et les disques d'étanchéité (32a,32b,32c) plusieurs fonctions de soupape peuvent être facilement réglées.

2. Soupape de coulissement à plusieurs voies à fonctions multiples selon la revendication 1,
caractérisée en ce que les deux tronçons longitudinaux séparés (29a,29b) du perçage de boîtier (29) peuvent être reliés ensemble ou séparés, en ce qui concerne l'écoulement, au moyen d'un disque d'étanchéité central (32a).

3. Soupape de coulissement à plusieurs voies à fonctions multiples selon la revendication 2,
caractérisée en ce que le disque d'étanchéité central (32a) est muni d'un canal périphérique (38) qui s'étend à peu près sur 180°, et en ce que sur le disque d'étanchéité central (32a) est formée une saillie (39) qui agit dans des découpes correspondantes (40) prévues en étant décalées les unes par rapport aux autres de 90° autour du boîtier de soupape (1).

4. Soupape de coulissement à plusieurs voies à fonctions multiples selon la revendication 1,
caractérisée en ce que dans la zone d'un couvercle de boîtier (19) sont prévus des disques d'étanchéité (32b,32c) externes devant des perçages transversaux (30) débouchant par paires sur la deuxième face longitudinale (28), l'un des tronçons longitudinaux (29a,29b) étant divisé au moyen d'une bille (23) agencée entre les perçages transversaux (30).

5. Soupape de coulissement à plusieurs voies à fonctions multiples selon l'une ou plusieurs des revendications 1 à 4,
caractérisée en ce que le joint de fond (4) en une seule pièce présente, symétriquement à l'axe de symétrie (48), pour la liaison de pression (P) une ouverture de passage (49) et un bouchon de fermeture (50).

6. Soupape de coulissement à plusieurs voies à foncions multiples selon l'une ou plusieurs des revendications 1 à 5,
caractérisée en ce que le joint de fond (4) en une seule pièce et reposant sur la première face longitudinale (2) comporte au moins au niveau des liaisons de commande (Z,Y) et des aérations (R,S) des bouchons amovibles (51).
